# EUROPÄISCHE PATENTSCHRIFT

(11) **EP 2 202 357 B1**
(45) Veröffentlichungstag und Bekanntmachung des Hinweises auf die Patenterteilung: **16.07.2014**
(21) Anmeldenummer: 09014882.6
(22) Anmeldetag: 01.12.2009
(51) Int. Cl.: D21H 19/32, D21H 23/78, G01B 11/00

(54) **Verfahren und Vorrichtung zum Beschichten von bedruckten Papierbahnen**
Method and device for coating printed sheets of paper
Dispositif et procédé destinés au revêtement de bandes de papier imprimées

(30) Priorität: 23.12.2008 DE 102008055584
(43) Veröffentlichungstag der Anmeldung: 30.06.2010
(73) Patentinhaber: Krieg, Gunther, Prof.Dr.Ing., 76227 Karlsruhe (DE)
(72) Erfinder: Krieg, Gunther, Prof. Dr-Ing., 76227 Durlach (DE); Maier, Wilfried, 75056 Sulzfeld (DE); Steiner, Markus, 76872 Steinweiler (DE)
(74) Vertreter: Lemcke, Brommer & Partner Patentanwälte Partnerschaft mbB

(56) Entgegenhaltungen:
- EP-A1- 0 930 161
- EP-A2- 1 541 247
- WO-A1-00/20842
- CA-A1- 2 351 866

## Beschreibung

Die Erfindung betrifft Verfahren zum Beschichten von bedruckten Papierbahnen beim Offsetdruck mit in einem Lösungsmittel/Hilfsstoff-Gemisch gelösten Silikon.

Im Stand der Technik ist es bekannt, bedrucktes Papier mit einer Silikonbeschichtung zu versehen, um die Gleitfähigkeit und den Glanz des bedruckten Papiers zu erhöhen.

Durch die CA 2351866 = WO 00/31499 ist es bekannt, bei Papierbahnen, die bereits mit Silikon beschichtet sind, das Flächengewicht der SilikonBeschichtung zu bestimmen und die Beschichtungsstärke je nach Notwendigkeit zu verringern oder zu erhöhen. Dazu wird die beschichtete Papierbahn mit Infrarotlicht durchstrahlt. Ein Teil dieses Infrarotlichtes wird von der beschichteten Papierbahn absorbiert, so dass aus der eintretenden Lichtschwächung Rückschlüsse auf die Dicke der Silikonbeschichtung möglich sind. Allerdings wird diese Messmethode von den Eigenschaften der Papierbahn beeinflusst, was durch eine Referenzmessung der Papierbahn nicht vollständig verhindert werden kann.

Ähnliche Verhältnisse liegen bei der WO 00/20842 vor.

Das Silikon für die Beschichtung wird üblicherweise von der chemischen Industrie in Form eines Silikon/-Wassergemisches bzw. einer Silikon-Wasser-Emulsion angeliefert. Diese Gemische haben in der Regel einen wesentlich höheren Anteil bzw. Konzentration von Silikon als dies später für die Beschichtung des bedruckten Papiers nötig ist. Das Silikon-/Wasser-Gemisch wird daher vor der Verwendung zum Beschichten des Papiers mit Wasser verdünnt, um eine vorgegebene Konzentration zu erreichen. Dosierpumpen fördern dabei vorgegebene Volumina von Wasser und/oder Silikon-Wasser-Gemisch in einen Vorratsbehälter, in dem dann ein Gemisch von Silikon und Wasser vorliegt, welches zur Beschichtung des bedruckten Papiers geeignet ist.

Soweit hier und im Folgenden, insbesondere in den Ansprüchen, von Papierbahn gesprochen wird, soll dieser Begriff dahingehend interpretiert werden, dass darunter auch Kartone, Kunststofffolien und dergleichen verstanden werden.

Durch die Beschichtung des bedruckten Papiers wird laufend Silikon-Wasser-Gemisch mittelbar aus dem Vorratsbehälter entnommen, sodass regelmäßig Silikon und/oder Wasser zudosiert werden muss, um den Verlust durch die Beschichtung des bedruckten Papiers wieder auszugleichen.

Nachteilig bei dem oben genannten Verfahren bzw, der Vorrichtung ist, dass mittels der Dosierpumpen nur jeweils vorgebbare Volumina von Silikon bzw. Wasser durch Betätigung der Dosierpumpen manuell durch einen Bediener und/oder in Abhängigkeit der Drehzahl einer Druckwalze zum Bedrucken von Papier automatisch zudosiert werden. Dadurch werden stark schwankende und viel zu hohe Silikonmengen in den Vorratsbehälter gefördert. Zum einen wird dadurch eine zu große Menge an Silikon verbraucht, als dies für die Beschichtung des bedruckten Papiers notwendig wäre, zum anderen führen zu hohe Mengen an Silikon zu Fleckenbildung auf dem bedruckten Papier, was die Qualität des beschichteten und bedruckten Papiers verschlechtert. Unabhängig davon besteht auch die Gefahr der Unterdosierung.

Aufgabe der vorliegenden Erfindung ist es daher, ein Verfahren und eine Vorrichtung zur Verfügung zu stellen, welche eine zuverlässige und genaue Kontrolle der Silikonkonzentration in einem Lösungsmittel-/Hilfsstoffgemisch ermöglicht. Gleichzeitig soll das Verfahren einfach in der Durchführung sein und die Vorrichtung kostengünstig in der Herstellung sowie einfach bedienbar sein.

Diese Aufgabe wird bei einem Verfahren zum Beschichten von bedruckten Papierbahnen beim Offsetdruck mit in einem Lösungsmittel/Hilfsstoff-Gemisch gelösten Silikon dadurch gelöst, dass zur Konzentrationsmessung des Silikons in dem Lösungsmittel zumindest folgende Schritte durchgeführt werden:
Bestrahlen einer Probe des Lösungsmittel/Hilfsstoff-Gemisches mit insbesondere infrarotem Licht zumindest einer Wellenlänge mittels eines Messstrahls und eines Referenzstrahls in einer Messzelle, wobei der Referenzstrahl eine vom Messstrahl unterschiedliche Wellenlänge aufweist, und anhand des Messstrahls ein Transmissionsspektrum über einen bestimmten Wellenlängenbereich ermittelt wird, wobei der Wellenlängenbereich zumindest eine charakteristische Wellenlänge des Silikons umfasst,
Messen der Transmission des Lichts durch die Probe mittels einer Messoptik, Ermitteln der Konzentration des Silikons anhand der Transmission des Lichts durch die Probe anhand seiner charakteristischen Wellenlänge unter Einsatz eines schmalbandigen Interferenzfilters zur Eliminierung von zum Transmissionsspektrum beitragenden Hilfsstoffen im Lösungsmittel/Hilfsstoff-Gemisch, Eliminieren von Verunreinigungen der Messoptik aus dem Transmissionsspektrum (S) anhand eines Vergleichs der Transmissionswerte von Messstrahl im Bereich der charakteristischen Wellenlänge und Referenzstrahl, und
Zuführen von Lösungsmitteln und/oder Silikon solange bis die Konzentration des Silikons im Lösungsmittel/Hilfsstoff-Gemisch einem vorgegebenen Sollwert entspricht.

Zwar ist es im Stand der Technik bereits bekannt, die Konzentration von Alkohol in Feuchtwasser für eine Druckplatte zu messen, allerdings betrifft diese Messung zum einen keine dem Druckprozess nachgelagerte Beschichtungssubstanz von bereits bedrucktem Papier, zum anderen ist das genannte Feuchtwasser auch keine Emulsion wie bei der vorliegenden Erfindung, was völlig andere Anforderungen an die Messung der Konzentration stellt. Das erfindungsgemäße schmalbandige Interferenzfilter ermöglicht hier zuverlässig die Selektion der charakteristischen Wellenlänge des Silikons und die Eliminierung optischer Absorptionen von Hilfsstoffen aus dem Transmissionsspektrum. Die charakteristische Absorptions-Wellenlänge des Silikons wird damit ohne Verfälschungen durch Hilfsstoffe aus dem Transmissionsspektrum isoliert, die Genauigkeit der Berechnung der Konzentration des Silikons wird infolge der Erhöhung der Selektion verbessert.

Durch das erfindungsgemäße Verfahren kann die Silikonkonzentration in dem Lösungsmittel/Hilfsstoff-Gemisch wesentlich genauer und zuverlässiger bestimmt und geregelt werden. Eine zu hohe oder zu niedrige Konzentration des Silikons wird vermieden, was nicht nur wirtschaftlicher ist, da das Silikon immer in der optimalen Konzentration in dem Lösungsmittel/Hilfsstoff-Gemisch vorliegt, sondern auch die Beschichtung des bedruckten Papiers an sich wird qualitativ hochwertiger. Weiterhin kann durch das erfindungsgemäße Verfahren ebenfalls auch das von der chemischen Industrie angelieferte Silikon-Wasser-Gemisch genauer und zuverlässiger vor einem Einsatz beim Beschichten des bedruckten Papiers überprüft werden: Weicht die Konzentration des Silikons in dem angelieferten Gemisch von dem vom Lieferanten angegebenen Wert beispielsweise nach unten ab, so kann dies bei einer Bezahlung der Lieferung berücksichtigt werden, wodurch zusätzliche Einsparungen möglich sind.

Vorteilhafterweise weist die Messzelle zur Messung der Konzentration von Silikon im Lösungsmittel/Hilfsstoff-Gemisch eine Schichtdicke von maximal 1mm auf. Durch die genannte Obergrenze der Schichtdicke der Messzelle kann die Transmission des Lichts durch das Silikon im Lösungsmittel/Hilfsstoff-Gemisch zum einen genau gemessen werden, zum anderen kann die Messzelle kleiner und kompakter ausgeführt werden.

Vorteilhafterweise weist das schmalbandige Interferenzfilter eine spektrale Halbwertsbreite von weniger als 20nm, insbesondere weniger als 10nm, auf. Auf diese Weise ist es möglich, das Silikon bzw. dessen charakteristische Wellenlänge selektiv und zuverlässig spektral aufzulösen. Hilfsstoffe, beispielsweise Wachse im Lösungsmittel/Hilfsstoff-Gemisch werden dadurch bei der Berechnung der Transmission bzw. Silikonkonzentration eliminiert. Lediglich das Silikon wird damit bei der Messung im Bereich der charakteristischen Wellenlänge berücksichtigt und eine genaue Transmissionsmessung und damit auch Konzentrationsbestimmung des Silikons im Lösungsmittel/Hilfsstoff-Gemisch wird ermöglicht.

Um Verunreinigungen der Messoptik im Bereich der charakteristischen Wellenlänge anhand des Vergleichs der Transmissionswerte von Messstrahl und Referenzstrahl aus dem Transmissionsspektrum zuverlässig zu eliminieren, beträgt die Wellenlänge des Referenzstrahls weniger als 2230nm. Unterhalb der Wellenlänge von 2230nm tragen lediglich Verunreinigungen der Messoptik zum Transmissionsspektrum bei, sodass eine genaue und zuverlässige Bestimmung der Schwächung des Lichts allein durch die Verschmutzungen ermöglicht wird. Diese können dann bei der Berechnung der Konzentration des Silikons im Lösungsmittel-/Hilfsstoffgemisch berücksichtigt werden.

Damit auch Hilfsstoffe im Lösungsmittel-/Hilfsstoff-Gemisch zuverlässig erkannt werden können, um beispielsweise Verstopfungen, Beschädigungen, etc. von Leitungen, Druckwerk, etc. zu vermeiden, ist es vorteilhaft, wenn die Hilfsstoffe mittels spektraler Zerlegung des Transmissionsspektrums, zum Beispiel durch ein optisches Gitter, erfasst werden. Weiter ist es zweckmäßig, wenn die Konzentration des Silikons und/oder der Hilfsstoffe anhand von Methoden der Chemometrie bestimmt werden. Ist beispielsweise die Konzentration der Hilfsstoffe ermittelt, kann durch Vorgabe von Obergrenzen für die Konzentrationen der Hilfsstoffe entschieden werden, ob gegebenenfalls Filter zur Filterung der Hilfsstoffe eingesetzt werden müssen und ob hierzu der gesamte Druckprozess angehalten werden muss.

Beim Einsatz von Methoden der Chemometrie zur Bestimmung der Konzentrationen des Silikons und/oder der Hilfsstoffe, insbesondere mit Hilfe von neuronalen Netzen, wird ein Maximum an chemischen Informationen aus dem gewonnenen Transmissionsspektrum extrahiert, d.h. es ermöglicht eine schnelle, zuverlässige und genaue Identifikation und/oder Konzentrationsbestimmung des Silikons und/oder der Hilfsstoffe.

Eine Vorrichtung zum Beschichten von bedruckten Papierbahnen beim Offset-Druck, wobei einem Lösungsmittel Hilfsstoffe, insbesondere Silikon, beigemischt werden und die Konzentration zumindest des Silikons in dem Lösungsmittel gemessen wird, insbesondere geeignet zur Durchführung eines Verfahrens gemäß zumindest einem der Ansprüche 1 bis 6 umfasst erfindungsgemäß zumindest zwei Lichtquellen mit unterschiedlicher Wellenlänge für einen Messstrahl und einen Referenzstrahl zur Bestrahlung der Probe des Lösungsmittel/Hilfsstoff-Gemisches in einer Messzelle mit insbesondere infrarotem Licht zumindest einer charakteristischen Wellenlänge des Silikons, zumindest einen Sensor zum Messen der Transmission des Lichts durch die Probe, wobei dieser Sensor ein Transmissionsspektrum anhand des Messstrahls über einen bestimmten Wellenlängenbereich misst, und der Wellenlängenbereich zumindest die charakteristische Wellenlänge des Silikons umfasst, zumindest einen Rechner zum Ermitteln der Konzentration zumindest des Silikons anhand der Transmission des Lichts durch die Probe, wobei der Rechner die Konzentration zumindest des Silikons anhand der charakteristischen Wellenlänge ermittelt mittels eines schmalbandigen Interferenzfilters zur Eliminierung von zum Transmissionsspektrum beitragenden Hilfsstoffen im Lösungsmittel/Hilfsstoff-Gemisch und der Rechner Mittel zum Zuführen von Verdünnungsmittel und/oder Silikon, solange bis die Konzentration des Silikons im Lösungsmittel/Hilfsstoff-Gemisch einem vorgegebenen Sollwert entspricht, steuert und der Rechner anhand eines Vergleichs von Messstrahl im Bereich der charakteristischen Wellenlänge und Referenzstrahl Verunreinigungen der Messoptik aus dem Transmissionsspektrum eliminiert.

Eine solche erfindungsgemäße Vorrichtung ermöglicht eine zuverlässige und genaue Kontrolle der Silikonkonzentration in einem Lösungsmittel/Hilfsstoff-Gemisch. Gleichzeitig ist die Vorrichtung kostengünstig in der Herstellung sowie einfach bedienbar.

Weitere Vorteile und Merkmale der Erfindung ergeben sich aus der nachfolgenden Beschreibung eines Ausführungsbeispiels. Dabei zeigt
- Figur 1: eine erfindungsgemäße Vorrichtung zur Messung und Regelung einer Silikon-Konzentration in einem Lösungsmittel/Hilfsstoffgemisch in schematischer Form;
- Figur 2: ein durch die Vorrichtung gemäß Figur 1 ermitteltes Transmissions-spektrum mit Referenz- und Messstrahl;
- Figur 3: ein schematischer Aufbau einer Vorrichtung gemäß Figur 1.

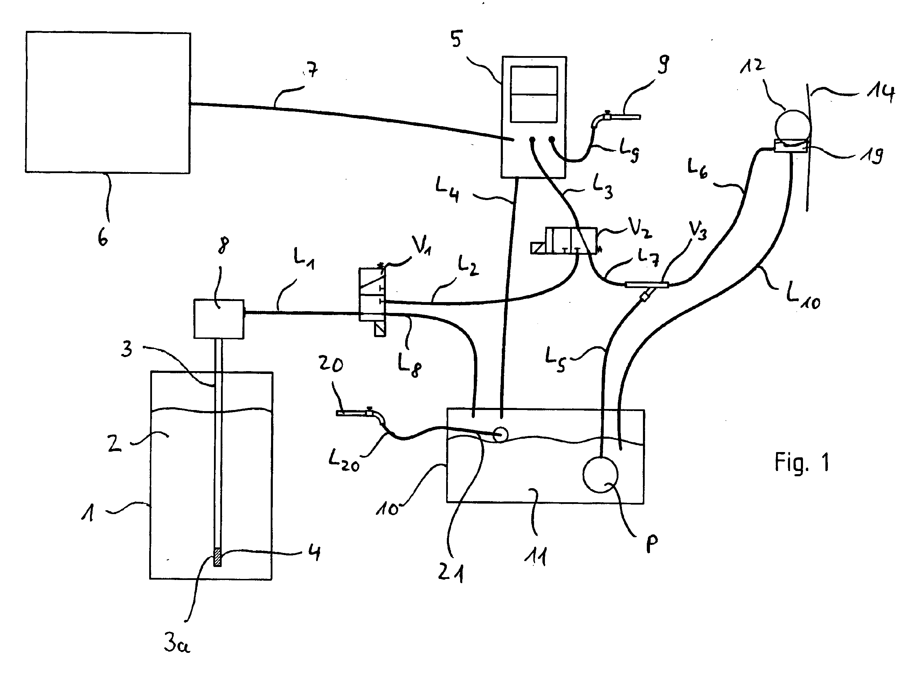

In Figur 1 ist eine erfindungsgemäße Vorrichtung zum Beschichten von bedruckten Papierbahnen 14 beim Offsetdruck in schematischer Form zur Regelung und Messung einer Konzentration des Silikons in einem Lösungsmittel/Hilfsstoff-Gemisch gezeigt. Auf der linken Seite unten in Figur 1 ist ein Behälter 1 gezeigt, indem sich ein Silikon-Wasser-Gemisch 2 befindet, welches von einem Lieferanten bzw. der chemischen Industrie einem Kunden zur Verfügung gestellt wird. In das Silikon-Wasser-Gemisch 2 ist eine Sauglanze 3 eingeführt, welche im unteren Bereich des Behälters 1 das Silikon-Wasser-Gemisch 2 entnehmen kann. An diesem unteren Ende 3a ist ein Füllstandssensor 4 angeordnet, der ermittelt, ob die Sauglanze 3 in einen neuen Behälter 1 mit einem neuen Silikon-Wasser-Gemisch 2 eingeführt wurde beziehungsweise ob der Füllstand des Behälters 1 soweit abgesunken ist, dass ein Austausch gegen einen neuen Behälter 1 notwendig wird.

Der Füllstandsensor 4 übermittelt dies an eine Mess- und Regelungsvorrichtung 5. Dabei ist es auch möglich, einen Wechsel des Behälters 1 über einen Bediener durch Betätigung eines Rechners 6, umfassend ein Touchpad zur Anzeige und Steuerung des Rechners 6, an die Mess- und Regelungsvorrichtung 5 über eine Verbindung 7 zu übermitteln. Um die Konzentration des Silikons im Silikon-Wasser-Gemisch 2 zu ermitteln, ist eine Pumpe 8 angeordnet, die über die Sauglanze 3 eine Probe des Silikon-Wasser-Gemisches 2 aus dem Behälter 1 entnehmen kann. Über eine Leitung L₁, ein Ventil V₁, eine weitere Leitung L₂, ein weiteres Ventil V₂ und eine weitere Leitung L₃ wird das entnommene Silikon-Wasser-Gemisch 2 der Mess- und Regelungsvorrichtung 5 zugeführt. In der Mess- und Regelungsvorrichtung 5 wird dann die Konzentration des Silikons im Silikon-Wasser-Gemisch bestimmt. Beide Ventile V₁, V₂ sind auch über eine Verbindung (nicht gezeigt) mit der Mess- und Regelungsvorrichtung 5 verbunden und über diese steuer- bzw. schaltbar.

Zunächst wird nach Einführen der Sauglanze 3 in einen neuen Behälter 1 mit einem neuen Silikon-Wasser-Gemisch 2 die Konzentration des Silikons in diesem Silikon-Wasser-Gemisch 2 gemessen und mit der von dem Lieferanten des neuen Behälters 1 angegebenen Konzentration des Silikons verglichen. Etwaige Unterschiede bzw. Abweichungen werden dem Bediener an der Mess- und Regelungsvorrichtung 5 angezeigt und insbesondere mittels eines Ausdrucks dokumentiert. Bei Bedarf kann nach einer Eingabe eines Silikon-Preises pro Liter Gemisch und nach einer Eingabe einer Füllmenge des Silikon-Wasser-Gemisches im Behälter 1 ein Differenzpreis im Vergleich zum Lieferpreis von der Mess- und Regelungsvorrichtung 5 angezeigt und berechnet werden und gegebenenfalls an den Rechner 6 über die Leitung 7 übermittelt werden, um dem Lieferanten des Silikon-Wasser-Gemisches 1 eine Korrekturanzeige zu einer von ihm für das Silikon-Wasser-Gemisch 2 gestellten Rechnung zuleiten zu können. Dabei kann das die Berechnung des Differenzpreises vom Rechner 6 auch als Zertifikat zur Verfügung gestellt werden.

Da das Silikon im Silikon-Wasser-Gemisch 2 in Form von unterschiedlich langen gelösten Silikonketten vorliegt, sammeln sich insbesondere im unteren Teil des Behälters 1 die schweren, langen Silikonketten auf Grund der Schwerkraft und erhöhen so die Silikonkonzentration in diesem Teil des Behälters 1, wohingegen sie im oberen Teil des Behälters 1 abnimmt. Die Konzentrationsverteilung folgt dabei im Wesentlichen analog zur barometrischen Höhenformel. Um trotzdem eine zuverlässige Konzentrationsbestimmung bei der Eingangskontrolle zu ermöglichen, kann die Sauglanze 3 nacheinander auch in verschiedenen Höhen im Behälter angeordnet werden, so dass dann eine hinreichend genaue mittlere Silikon-Konzentration des angelieferten Silikon-Wasser-Gemisches 2 bestimmt werden kann.

Um die Konzentration des Silikons im Silikon-Wasser-Gemisch zuverlässig zu messen, ist an der Mess- und Regelungsvorrichtung 5 eine Leitung L₉ angeschlossen, die wiederum an eine Wasserzuführung 9 angeschlossen ist. Anhand des zugeführten Wassers erfolgt ein Abgleich der Mess- und Regelvorrichtung 5 für die Konzentrationsmessung des Silikons; es wird somit der Nullpunkt der Konzentration für das Silikon im Silikon-Wassergemisch entsprechend festgelegt. Dabei kann dieser Abgleich kontinuierlich, also in regelmäßigen Abständen oder auch manuell durch einen Bediener erfolgen.

Nach dem erfolgten Messen der Konzentration des Silikons in dem neuen Silikon-Wasser-Gemisch 2 werden nun die Ventile V₁ und V₂ derart betätigt, sodass das Silikon-Wasser-Gemisch 2 des Behälters 1 nicht mehr über die Leitung L₂ der Mess- und Regelvorrichtung 5 zuführt wird, sondern über die Leitung L₈ dem Vorratsbehälter 10.

Das Silikon-Wasser-Gemisch 11 im Vorratsbehälter 10 wird für das Beschichten kontinuierlich mittels einer Pumpe P über eine Leitung L₅ , eine Y-Verbindung V₃ und eine Leitung L₆ zu einer in einem Bad 19 befindlichen Tauchwalze 12, die in der Regel eine Chrom-Beschichtung aufweist, zum Beschichten einer bedruckten Papierbahn 14 mittels der Tauchwalze 12 gefördert. Von dem Bad 19 der Tauchwalze 12 gelangt das darin befindliche Silikon-Wasser-Gemisch über einen Überlauf (nicht gezeigt) über die Leitung L₁₀ wieder in den Vorratsbehälter 10. Es findet also ein laufender Austausch zwischen dem Bad 19 der Tauchwalze 12 und dem Silikon-Wasser-Gemisch 11 des Vorratsbehälters 10 statt; dieser Kreislauf zwischen Vorratsbehälter 10 über die Leitung L₅, die Y-Abzweigung V₃ die Leitung L₆, das Bad 19, den Überlauf und die Leitung L₁₀ wird als Prozesskreislauf bezeichnet.

Gleichzeitig wird kontinuierlich auch der Inhalt des Vorratsbehälters 10 bezüglich seiner Silikonkonzentration im Silikon-Wassergemisch 11 gemessen. Hierzu fördert die Pumpe P im Vorratsbehälter 10 über die Leitung L₅, die Y-Abzweigung V₃, die Leitung L₇ , das Ventil V₂ und die Leitung L₃ das Silikon-Wasser-Gemisch 11 des Vorratsbehälters 10 zu der Mess- und Regelvorrichtung 5 zur Messung und Regelung der Silikonkonzentration. Über die Leitung L₄ wird das Silikon-Wasser-Gemisch wieder zurück in den Vorratsbehälter 10 geleitet; dieser Kreislauf wird als Messkreislauf bezeichnet. Um ein Verschmutzen der Mess- und Regelvorrichtung bei der Bestimmung der Silikonkonzentration zu vermeiden, umfasst die Y-Abzweigung V₃ stromabwärts in Richtung der Leitung L₇ einen Filter(nicht gezeigt), um beispielsweise Papierabrieb in Form von Flusen, etc. zu filtern.

Weiter ist in dem Vorratsbehälter 10 ein Schwimmerschalter 21 angeordnet. Der Schwimmerschalter 21 ist mit einem Ventil (nicht gezeigt) verbunden, welches wiederum mit einer Leitung L₂₀ und einer Wasserzuführung 20 verbunden ist. Beim einem Absinken des Pegelstandes im Vorratsbehälter 10 auf Grund des Verbrauchs von Silikon-Wasser-Gemisch für die Beschichtung der Papierbahn 14 betätigt der Schwimmerschalter 21 das Ventil (nicht gezeigt), sodass über die Wasserzuführung 20 und die Leitung L₂₀ Wasser dem Vorratsbehälter 10 zugeführt wird. Sobald der Pegelstand des Vorratsbehälters 10 einen vorgegebenen Wert erreicht hat, betätigt der Schwimmerschalter 21 wieder das Ventil und stoppt die Wasserzufuhr in den Vorratsbehälter 10. Selbstverständlich liegt auch jede andere Form der Füllstandsmessung und -regelung im Rahmen der Erfindung.

Stellt nun die Mess- und Regelvorrichtung 5 über den Messkreislauf eine Silikonkonzentration unterhalb eines vorgegebenen Sollwertes fest, betätigt die Mess- und Regelvorrichtung 5, die mit der Pumpe 8 verbunden ist, diese. Die Pumpe 8 entnimmt dann über die Sauglanze 3 dem Behälter 1 das angelieferte Silikon-Wassergemisch 2 und führt dies über die Leitung L₁, das Ventil V₁ und die Leitung L₈ dem Vorratsbehälter 10 zu, solange bis die Mess- und Regelvorrichtung 5 über den Messkreislauf eine Übereinstimmung der gemessenen Silikonkonzentration mit dem vorgegebenen Sollwert feststellt. Eine Überdosierung des Silikons im Silikon-Wassergemisch 11 im Vorratsbehälter 10 wird damit vermieden.

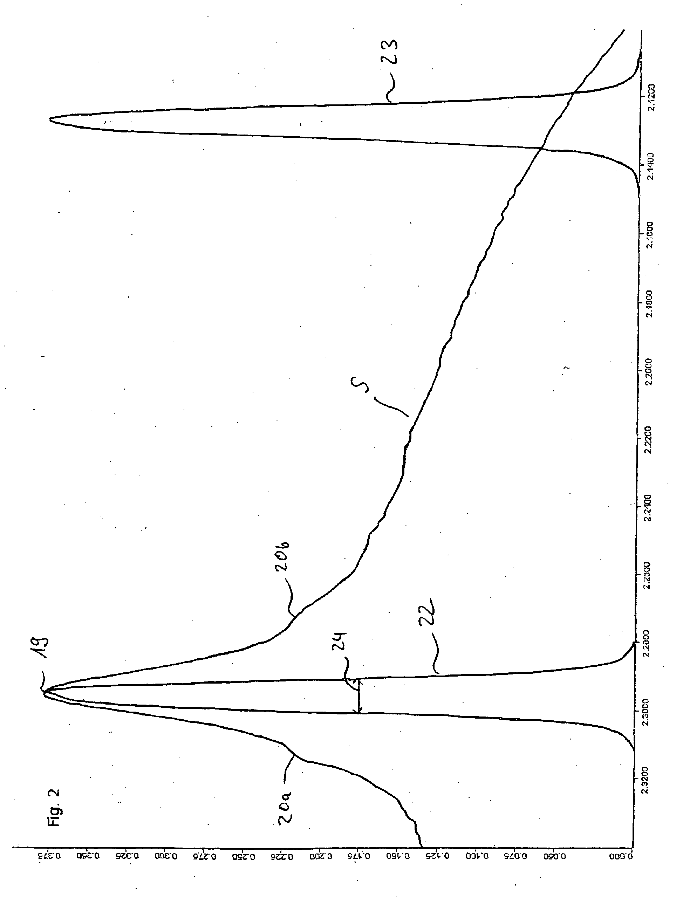

In Figur 2 ist ein Transmissions-Spektrum S im Bereich zwischen 2350nm und 2100nm gezeigt. Über der Wellenlänge aufgetragen ist die Lichtschwächung beim Durchstrahlen der Probe des Silikon-Wasser-Gemisches 2 in der Mess- und Regelungsvorrichtung 5. Das Spektrum bzw. Kurve S verläuft dabei von links nach rechts von höherer zu niedrigerer Wellenlänge, wobei die Kurve S zunächst waagerecht verläuft und dann im Bereich von ca. 2325nm in einen fast senkrechten Anstieg übergeht bevor die Steigung im weiteren Verlauf in einem Bereich 20a wieder etwas abflacht, um anschließend zu einem Hochpunkt 19 steil anzusteigen. Vom Hochpunkt 19 fällt das Spektrum S wieder steil ab bis zu einem Bereich 20b analog zum Bereich 20a. Im Bereich 20b weist die Kurve in einem kleinen Wellenlängenbereich eine kleinere negative Steigung auf, bevor es dann weiter zu niedrigeren Wellenlängen wieder etwas steiler abfällt im Bereich von ca. 2270nm und dann fast linear gegen Null absinkt im Bereich von 2100nm Wellenlänge. Der Hochpunkt 19 der Lichtschwächung korrespondiert dabei zu einer Wellenlänge von 2295nm, welcher von den Silikonmolekülen im Silikon-Wasser-Gemisch verursacht wird und eine erhöhte Absorption des Lichts bei dieser Wellenlänge bewirkt. Die Bereiche 20a und 20b korrespondieren zu charakteristischen Wellenlängen von Hilfsstoffen insbesondere von Wachsen (Bereich 20a) und Antistatik-Produkten (Bereich 20b). Um den Hochpunkt 19, verursacht durch das Silikon, möglichst exakt im Spektrum S auflösen zu können, ist ein schmalbandiger Interferenzfilter angeordnet, welcher eine Halbwertsbreite 24 von weniger als 10nm aufweist. Der Hochpunkt 19 ist dann anhand des schmalen Wellenlängenbereichs um die charakteristische Silikon-Wellenlänge von 2295nm auflösbar.

Um zuverlässig bei der Bestimmung der Silikonkonzentration des Silikon-Wasser-Gemisches 2 den Einfluss von Verschmutzungen der Messoptik zu eliminieren, wird ein Referenzstrahl mit einem Referenzwellenlängenbereich 23 verwendet. Dieser Referenzstrahl besitzt eine Wellenlänge, welche kleiner ist als die Wellenlänge des Hochpunktes 19 bzw. der charakteristischen Wellenlänge des Silikons. Zur Lichtschwächung im Referenzwellenbereich 23 trägt das Silikon im Silikon-Wasser-Gemisch nicht bei, sondern lediglich Verschmutzungen der Messoptik. Vergleicht man nun die gemessenen Intensitäten des Referenzstrahls und des Messstrahls im Bereich der charakteristischen Silikon-Wellenlänge, so lassen sich Verschmutzungen der Optik durch Quotientenbildung der Intensitäten des Messstrahls bei der charakteristischen Wellenlänge des Silikons und dem Referenzstrahl eliminieren. Man erhält so ausschließlich die Lichtschwächung, welche durch das Silikon bewirkt wird. Dadurch ist eine äußerst genaue und zuverlässige Bestimmung der Silikon-Konzentration im Silikon-Wasser-Gemisch möglich, beispielsweise anhand des Lambert-Beerschen-Gesetzes.

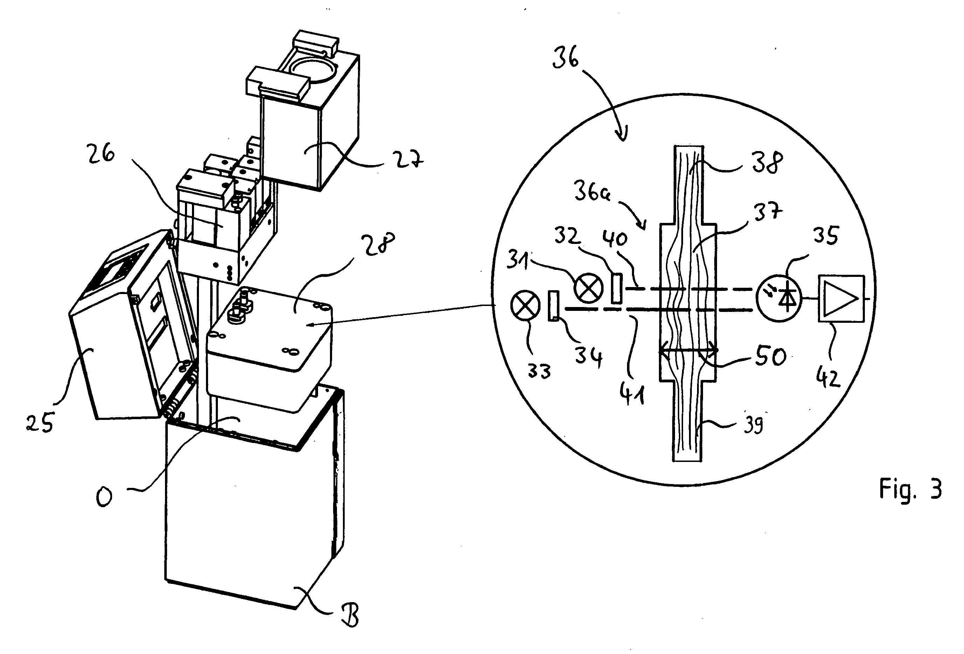

Figur 3 zeigt eine erfindungsgemäße Vorrichtung, geeignet zur Durchführung eines Verfahrens gemäß zumindest einem der Ansprüche 1-6. Auf der linken Seite der Figur 3 ist die erfindungsgemäße Vorrichtung gezeigt umfassend mehrere Module. Das mit der Bezugsziffer 26 bezeichnete Modul umfasst dabei eine Anordnung von Ventilen V₁, V₂ zur Steuerung und Regelung bzw. Beaufschlagung der jeweiligen Leitungen L₁, L₂, usw. Zur Reinigung einer Messzelle 36 zur Messung der Silikon-Konzentration ist ein Behälter 27 angeordnet, der eine Reinigungsflüssigkeit umfasst. Das Modul 26 steuert dann Ventile und Leitungen derart, dass die Messzelle 36 regelmäßig mit der Reinigungsflüssigkeit insbesondere einer tensidhaltigen Flüssigkeit beaufschlagt wird. Dies führt zu einer allgemeinen Erhöhung der optischen Transmission eines Mess- 40 und Referenzstrahls 41 und ermöglicht eine höhere Genauigkeit bei der Bestimmung der Silikonkonzentration im Silikon-Wasser-Gemisch anhand des Spektrums S. In einem weiteren Modul 28 ist eine Messanordnung, insbesondere die Messzelle 36 zum Bestrahlen einer Probe und Messen der Transmission des Lichts durch diese Probe angeordnet. Die Module 26, 27, 28 können dabei in einem Behälter B untergebracht werden. Zur Wartung der Module ist eine Öffnung O des Behälters B vorgesehen. Der Verschluss der Öffnung O erfolgt mittels eines Moduls 25, welches einen Rechner 6 zur mikroelektronischen Signalauswertung der Messsignale der Messzelle 36 umfasst.

Auf der rechten Seite der Figur 3 ist die Messzelle 36 des Moduls 28 zur Messung der Konzentration des Silikons schematisch gezeigt. Die Messzelle 36 umfasst dabei einen Zulauf 38 und einen Ablauf 39. Über den Zulauf 38 strömt ein Teil eines Silikon-Wasser-Gemischs durch den Messbereich 36a der Messzelle 36, die eine geeignete Schichtdicke 50 von maximal 1 mm aufweist, zu dem Ablauf 39. Dabei ist der Zulauf 38 mit der Leitung L₃ (siehe Figur 1) verbunden, der Ablauf 39 mit der Leitung L₄. Zwischen dem Zulauf 38 und dem Ablauf 39 strömt das Silikon-Wasser-Gemisch und wird seitlich von zwei Lichtquellen 31, 33 über entsprechende Messoptiken 32, 34 mit dem Messstrahl 40 und dem Referenzstrahl 41 bestrahlt. Nach dem Durchgang durch die Probe des Silikon-Wasser-Gemisches wird das Licht der Strahlen 40, 41 von einer Photodiode 35 bzw. einem Strahlungssensor 35 anhand der Intensität des transmittierten Lichts gemessen und an eine Vorrichtung 42 zur analogen Signalaufbereitung übermittelt. Dabei werden die Lichtquellen 31, 33 von Messstrahl 40 und Referenzstrahl 41 mit unterschiedlichen Frequenzen getaktet, um das transmittierte Licht des Messstrahls 40 und Referenzstrahls 41 nach der Detektion durch den Sensor 35 und der Signalaufbereitung 42 zu identifizieren bzw. unterscheiden zu können. Die beiden Lichtquellen 31, 33 sowie der Sensor 35 bzw. die Vorrichtung 42 zur Signalaufbereitung sind dabei mit dem Rechner 6 zur Steuerung der Lichtquellen 31, 33 und zur Verarbeitung der Signale des Sensors 35 bzw. Vorrichtung 42 zur Berechnung der Konzentration des Silikons im Silikon-Wasser-Gemisch verbunden. Durch die Verwendung des Messstrahls 40 und des Referenzstrahls 41 können nicht nur Verschmutzungen der Messoptik 32, 34 bei der Berechnung der Konzentration des Silikons eliminiert werden, sondern ebenfalls ein Driften der Elektronik in der Mess- und Regelungsvorrichtung 5 und ebenso auch in der Vorrichtung 42 zur analogen Signalaufbereitung.

Es liegt dabei im Rahmen der Erfindung, dass anhand des Spektrums S der Figur 2 auch zusätzlich Hilfsstoffe, beispielsweise Wachse (Bereich 20a) als auch Antistatik-Produkte (Bereich 20b) spektral erfasst und quantitativ ermittelt werden können: Es wird dann eine Sensorvorrichtung verwendet, welche beispielsweise 64 oder 128 linear angeordnete Sensoren 35 umfasst. Dabei erfolgt dann eine spektrale Zerlegung durch ein optisches Gitter, wobei ein Spektralbereich zwischen 2240nm und 2320nm erfasst wird, der typischerweise die charakteristischen Wellenlängen von Wachsen und Antistatik-Produkten umfasst. Die jeweilige Konzentrationsbestimmung des Silikons sowie der Hilfsstoffe (Wachse, Antistatik-Produkte) erfolgt unter Verwendung von Auswertemethoden der Chemometrie, insbesondere mit Hilfe von neuronalen Netzen.

Schließlich liegt es im Rahmen der Erfindung das erfindungsgemäße Zuführen nicht nur bei Lösungsmitteln und/oder Silikon, sondern auch bei anderen Hilfsstoffen, wie Wachsen und Antistatik-Produkten, anzuwenden.

## Patentansprüche

1. Verfahren zum Beschichten von bedruckten Papierbahnen (14) beim Offsetdruck mit in einem Lösungsmittel/Hilfsstoff-Gemisch gelösten Silikon,
**dadurch gekennzeichnet,**
**dass** zur Konzentrationsmessung und -regelung des Silikons in dem Lösungsmittel zumindest folgende Schritte durchgeführt werden:
Bestrahlen (31, 33) einer Probe des Lösungsmittel/Hilfsstoff-Gemisches mit insbesondere infrarotem Licht zumindest einer Wellenlänge mittels eines Messstrahls (40) und eines Referenzstrahls (41) in einer Messzelle (36), wobei der Referenzstrahl (41) eine vom Messstrahl (40) unterschiedliche Wellenlänge aufweist, und anhand des Messstrahls (40) ein Transmissionsspektrum (S) über einen bestimmten Wellenlängenbereich ermittelt wird, wobei der Wellenlängenbereich zumindest eine charakteristische Wellenlänge (19) des Silikons umfasst,
Messen (35) der Transmission des Lichts durch die Probe mittels einer Messoptik (32, 34),
Ermitteln der Konzentration des Silikons anhand der Transmission des Lichts durch die Probe anhand seiner charakteristischen Wellenlänge (19) unter Einsatz eines schmalbandigen Interferenzfilters zur Eliminierung von zum Transmissionsspektrum (S) beitragenden Hilfsstoffen im Lösungsmittel/Hilfsstoff-Gemisch,
Eliminieren von Verunreinigungen der Messoptik (32, 34) aus dem Transmissionsspektrum (S) anhand eines Vergleichs der Transmissionswerte von Messstrahl (40) im Bereich der charakteristischen Wellenlänge (19) und Referenzstrahl (41), und
Zuführen von Lösungsmitteln und/oder Silikon solange bis die Konzentration des Silikons im Lösungsmittel/Hilfsstoff-Gemisch einem vorgegebenen Sollwert entspricht.

2. Verfahren nach Anspruch 1,
**dadurch gekennzeichnet,**
**dass** die Messzelle (36) zur Messung der Konzentration von Silikon im Lösungsmittel/Silikon-Gemisch eine Schichtdicke (50) von maximal 1 mm aufweist.

3. Verfahren nach Anspruch 1,
**dadurch gekennzeichnet,**
**dass** der schmalbandige Interferenzfilter eine Halbwertsbreite (24) von weniger als 20nm, insbesondere weniger als 10nm, aufweist.

4. Verfahren nach Anspruch 1,
**dadurch gekennzeichnet,**
**dass** die Wellenlänge des Referenzstrahls (23) weniger als 2230nm beträgt.

5. Verfahren nach Anspruch 1,
**dadurch gekennzeichnet,**
**dass** die Hilfsstoffe (20a, 20b) mittels spektraler Zerlegung des Transmissionsspektrums (S) erfasst werden.

6. Verfahren nach zumindest Anspruch 1,
**dadurch gekennzeichnet,**
**dass** die Konzentration von Silikon und/oder der Hilfsstoffe anhand von Methoden der Chemometrie bestimmt werden.

7. Vorrichtung zum Beschichten von bedruckten Papierbahnen. (14) beim Offset-Druck, wobei einem Lösungsmittel Hilfsstoffe, Zumindest Silikon, beigemischt werden und die Konzentration zumindest des Silikons in dem Lösungsmittel gemessen wird, insbesondere geeignet zur Durchführung eines Verfahrens gemäß zumindest einem der Ansprüche 1 bis 6,
**dadurch gekennzeichnet,**
**dass** die Vorrichtung umfasst:
zumindest zwei Lichtquellen (31, 33) mit unterschiedlicher Wellenlänge für einen Messstrahl (40) und einen Referenzstrahl (41) zur Bestrahlung der Probe des Lösungsmittel/Hilfsstoff-Gemisches in einer Messzelle (36) mit insbesondere infrarotem Licht zumindest einer charakteristischen Wellenlänge des Silikons,
zumindest einen Sensor (35) zum Messen der Transmission des Lichts durch die Probe, wobei dieser Sensor (35) ein Transmissionsspektrum (S) anhand des Messstrahls (40) über einen bestimmten Wellenlängenbereich misst, und der Wellenlängenbereich zumindest die charakteristische Wellenlänge (19) des Silikons umfasst,
zumindest einen Rechner (6) zum Ermitteln der Konzentration zumindest des Silikons anhand der Transmission des Lichts durch die Probe, wobei der Rechner (6) die Konzentration zumindest des Silikons anhand der charakteristischen Wellenlänge (19) ermittelt mittels eines schmalbandigen Interferenzfilters zur Eliminierung von zum Transmissionsspektrum (S) beitragenden Hilfsstoffen (20a, 20b) im Lösungsmittel/Hilfsstoff-Gemisch und der Rechner (6) Mittel zum Zuführen von Verdünnungsmittel und/oder Silikon, solange bis die Konzentration des Silikons im Lösungsmittel/Hilfsstoff-Gemisch einem vorgegebenen Sollwert entspricht, steuert
und der Rechner (6) anhand eines Vergleichs von Messstrahl (40) im Bereich der charakteristischen Wellenlänge (19) und Referenzstrahl (41) Verunreinigungen der Messoptik (32, 34) aus dem Transmissionsspektrum (S) eliminiert.

## Claims

1. Method of coating printed paper webs (14) with silicone dissolved in a solvent/auxiliary mixture, in an offset printing process,
**characterised in that**
for measuring and regulating the concentration of the silicone in the solvent at least the following steps are carried out:
irradiation (31, 33) of a sample of the solvent/auxiliary mixture, especially with infrared light of at least one wavelength, by means of a measuring beam (40) and a reference beam (41) in a measuring cell (36), wherein the reference beam (41) has a wavelength different from that of the measuring beam (40), and, with reference to the measuring beam (40), a transmission spectrum (S) over a specific wavelength range is determined, the wavelength range including at least one characteristic wavelength (19) of the silicone,
measurement (35) of the transmission of the light through the sample by means of a measuring optical system (32, 34),
determination of the concentration of the silicone on the basis of the transmission of the light through the sample with reference to its characteristic wavelength (19) using a narrow-band interference filter to eliminate auxiliaries in the solvent/auxiliary mixture that contribute to the transmission spectrum (S),
elimination of impurities of the measuring optical system (32, 34) from the transmission spectrum (S) on the basis of a comparison of the transmission values of the measuring beam (40) in the region of the characteristic wavelength (19) and of the reference beam (41), and
supplying solvents and/or silicone until the concentration of the silicone in the solvent/auxiliary mixture corresponds to a preset desired value.

2. Method according to claim 1,
**characterised in that**
the measuring cell (36) for measuring the concentration of silicone in the solvent/silicone mixture has a layer thickness (50) of a maximum of 1 mm.

3. Method according to claim 1,
**characterised in that**
the narrow-band interference filter has a full width half maximum (24) of less than 20 nm, especially less than 10 nm.

4. Method according to claim 1,
**characterised in that**
the wavelength of the reference beam (23) is less than 2230 nm.

5. Method according to claim 1,
**characterised in that**
the auxiliaries (20a, 20b) are detected by means of spectral resolution of the transmission spectrum (S).

6. Method according to at least claim 1,
**characterised in that**
the concentration of silicone and/or of the auxiliaries is determined with the aid of chemometric methods.

7. Apparatus for coating printed paper webs (14) in an offset printing process, wherein auxiliaries, at least silicone, are added to a solvent and the concentration of at least the silicone in the solvent is measured, the apparatus being especially suitable for carrying out a method in accordance with at least one of claims 1 to 6,
**characterised in that**
the apparatus comprises:
at least two light sources (31, 33) of different wavelengths for a measuring beam (40) and a reference beam (41) for irradiating the sample of the solvent/auxiliary mixture in a measuring cell (36), especially with infrared light of at least one characteristic wavelength of the silicone,
at least one sensor (35) for measuring the transmission of the light through the sample, wherein the sensor (35), with reference to the measuring beam (40), measures a transmission spectrum (S) over a specific wavelength range, and the wavelength range includes at least the characteristic wavelength (19) of the silicone,
at least one computer (6) for determining the concentration of at least the silicone on the basis of the transmission of the light through the sample, wherein the computer (6) determines the concentration of at least the silicone with reference to the characteristic wavelength (19) by means of a narrow-band interference filter to eliminate auxiliaries (20a, 20b) in the solvent/auxiliary mixture that contribute to the transmission spectrum (S), and the computer (6) controls means for supplying diluent and/or silicone until the concentration of the silicone in the solvent/auxiliary mixture corresponds to a preset desired value,
and the computer (6), on the basis of a comparison of the measuring beam (40) in the region of the characteristic wavelength (19) and the reference beam (41) eliminates impurities of the measuring optical system (32, 34) from the transmission spectrum (S).

## Revendications

1. Procédé dévolu au revêtement de bandes de papier (14) imprimées, au cours de l'impression offset, par du silicone dissous dans un mélange de solvant/substances auxiliaires,
**caractérisé par le fait**
**que** la mesure et la régulation de la concentration du silicone, dans le solvant, gouvernent au moins l'exécution des étapes suivantes :
irradiation (31, 33) d'un échantillon du mélange de solvant/substances auxiliaires par une lumière notamment infrarouge présentant au moins une longueur d'ondes, au moyen d'un rayon de mesure (40) et d'un rayon de référence (41), dans une cellule de mesure (36), ledit rayon de référence (41) présentant une longueur d'ondes qui diffère de celle dudit rayon de mesure (40), et un spectre de transmission (S) étant défini dans une plage déterminée de longueurs d'ondes à l'appui dudit rayon de mesure (40), laquelle plage de longueurs d'ondes inclut au moins une longueur d'ondes (19) caractéristique du silicone,
mesure (35) de la transmission de la lumière à travers l'échantillon, au moyen d'une optique de mesure (32, 34),
définition de la concentration du silicone sur la base de la transmission de la lumière à travers ledit échantillon, à l'appui de sa longueur d'ondes caractéristique (19), par utilisation d'un filtre d'interférence à bande étroite, en vue d'éliminer des substances auxiliaires renfermées par ledit mélange de solvant/substances auxiliaires et impliquées dans ledit spectre de transmission (S),
élimination, dudit spectre de transmission (S), d'impuretés de ladite optique de mesure (32, 34) sur la base d'une comparaison des valeurs de transmission dudit rayon de référence (41) et dudit rayon de mesure (40) dans la région de ladite longueur d'ondes caractéristique (19), et
délivrance de solvants et/ou de silicone jusqu'à ce que la concentration du silicone corresponde à une valeur de consigne préétablie dans ledit mélange de solvant/substances auxiliaires.

2. Procédé selon la revendication 1,
**caractérisé par le fait**
**que** la cellule de mesure (36), affectée à la mesure de la concentration de silicone dans le mélange de solvant/substances auxiliaires, présente une épaisseur de couche (50) de 1 mm au maximum.

3. Procédé selon la revendication 1,
**caractérisé par le fait**
**que** le filtre d'interférence à bande étroite présente une largeur à mi-valeur (24) inférieure à 20 nm, notamment inférieure à 10 nm.

4. Procédé selon la revendication 1,
**caractérisé par le fait**
**que** la longueur d'ondes (23) du rayon de référence est inférieure à 2 230 nm.

5. Procédé selon la revendication 1,
**caractérisé par le fait**
**que** les substances auxiliaires (20a, 20b) sont détectées par décomposition spectrale du spectre de transmission (S).

6. Procédé selon au moins la revendication 1,
**caractérisé par le fait**
**que** la concentration de silicone et/ou des substances auxiliaires est déterminée à l'appui de méthodes chimiométriques.

7. Dispositif dévolu au revêtement de bandes de papier (14) imprimées au cours de l'impression offset, sachant que des substances auxiliaires, au moins du silicone, sont adjointes à un solvant, et qu'au moins la concentration du silicone est mesurée dans ledit solvant, se prêtant notamment à la mise en oeuvre d'un procédé conforme à au moins l'une des revendications 1 à 6,
**caractérisé par le fait**
**que** ledit dispositif comprend :
au moins deux sources de lumière (31, 33) présentant des longueurs d'ondes différentes pour un rayon de mesure (40) et un rayon de référence (41), en vue de l'irradiation de l'échantillon du mélange de solvant/substances auxiliaires, dans une cellule de mesure (36), par une lumière notamment infrarouge présentant au moins une longueur d'ondes caractéristique du silicone,
au moins un détecteur (35) conçu pour mesurer la transmission de la lumière à travers l'échantillon, ce détecteur (35) mesurant un spectre de transmission (S) à l'appui dudit rayon de mesure (40), dans une plage déterminée de longueurs d'ondes, et ladite plage de longueurs d'ondes incluant au moins la longueur d'ondes (19) caractéristique du silicone,
au moins un calculateur (6) conçu pour définir au moins la concentration du silicone sur la base de la transmission de la lumière à travers ledit échantillon, sachant que ledit calculateur (6) définit au moins la concentration du silicone à l'appui de ladite longueur d'ondes caractéristique (19), au moyen d'un filtre d'interférence à bande étroite, en vue d'éliminer des substances auxiliaires (20a, 20b) renfermées par ledit mélange de solvant/substances auxiliaires et impliquées dans ledit spectre de transmission (S), et que ledit calculateur (6) commande des moyens, dédiés à la délivrance de diluants et/ou de silicone, jusqu'à ce que la concentration du silicone corresponde à une valeur de consigne préétablie dans ledit mélange de solvant/substances auxiliaires,
lequel calculateur (6) élimine, dudit spectre de transmission (S), des impuretés de l'optique de mesure (32, 34) sur la base d'une comparaison dudit rayon de référence (41) et dudit rayon de mesure (40) dans la région de ladite longueur d'ondes caractéristique (19).
